# EUROPEAN PATENT APPLICATION

(11) **EP 2 677 410 A1**
(43) Date of publication of application: **25.12.2013**
(21) Application number: 12172892.7
(22) Date of filing: 21.06.2012
(51) Int. Cl.: G06F 3/048

(54) **Electronic device including touch-sensitive display and method of controlling a position indicator**

(71) Applicant: BlackBerry Limited, Waterloo, ON N2K 0A7 (CA)
(72) Inventor: Kuo, Margaret Elizabeth, Waterloo, Ontario N2L 3W8 (CA); Pasquero, Jerome, Waterloo, Ontario N2L 3W8 (CA); Thorsander, Simon Martin, Malmo 21140 (IT)
(74) Representative: Moore, Barry

(57) **Abstract**

A method includes displaying information including a plurality of characters on a touch-sensitive display of an electronic device, detecting an indicator control mode input, in response to detecting the indicator control mode input, displaying an indicator controller associated with a position indicator, the indicator controller having a first area associated with a first direction and a second area associated with a second direction, when a tap is detected at a location associated with the first area, moving the position indicator, by a single character of the plurality of characters, in the first direction, and when a tap is detected at a location associated with the second area, moving the position indicator, by a single character of the plurality of characters, in the second direction.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

Improvements in electronic devices with touch-sensitive displays are desirable.

### SUMMARY

According to one aspect, a method is provided. The method includes displaying information including a plurality of characters on a touch-sensitive display of an electronic device, detecting an indicator control mode input, in response to detecting the indicator control mode input, displaying an indicator controller associated with a position indicator, the indicator controller having a first area associated with a first direction and a second area associated with a second direction, when a tap is detected at a location associated with the first area, moving the position indicator, by a single character of the plurality of characters, in the first direction, and when a tap is detected at a location associated with the second area, moving the position indicator, by a single character of the plurality of characters, in the second direction.

According to another aspect, an electronic device is provided. The electronic device includes a touch-sensitive display and at least one processor coupled to the touch-sensitive display and configured to display information including a plurality of characters on a touch-sensitive display of an electronic device, detect a indicator control mode input, in response to detecting the indicator control mode input, display an indicator controller associated with a position indicator, the indicator controller having a first area associated with a first direction and a second area associated with a second direction, when a tap is detected at a location associated with the first area, move the position indicator, by a single character within the plurality of characters, in the first direction, and when a tap is detected at a location associated with the second area, move the position indicator, by a single character within the plurality of characters, in the second direction.

### BRIEF DESCRIPTION OF THE DRAWINGS

Embodiments of the present disclosure will now be described, by way of example only, with reference to the attached Figures, wherein:

FIG. 1 is a block diagram of a portable electronic device in accordance with an example;

FIG. 2 is a flowchart illustrating an example of a method of controlling a position indicator;

FIG. 3 through FIG. 11 illustrate examples of control of a position indicator in accordance with the method of FIG. 2; and

FIG. 12 and FIG. 13 illustrate further examples of indicator controllers.

### DETAILED DESCRIPTION

The following describes an electronic device and a method that includes displaying information including a plurality of characters on a touch-sensitive display of an electronic device, detecting an indicator control mode input, in response to detecting the indicator control mode input, displaying an indicator controller associated with a position indicator, the indicator controller having a first area associated with a first direction and a second area associated with a second direction, when a tap is detected at a location associated with the first area, moving the position indicator, by a single character of the plurality of characters, in the first direction, and when a tap is detected at a location associated with the second area, moving the position indicator, by a single character of the plurality of characters, in the second direction.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

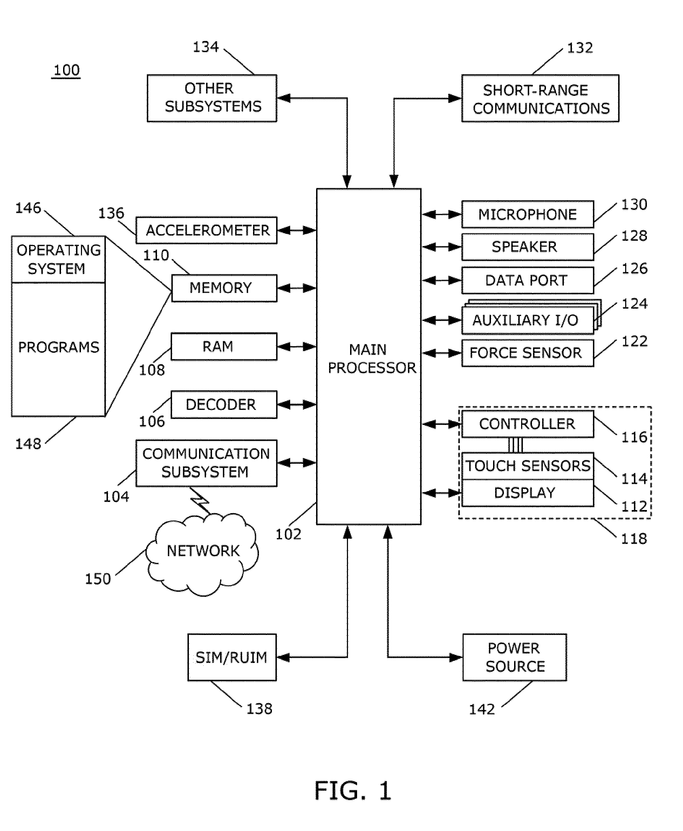

A block diagram of an example of a portable electronic device 100 is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch, duration of a touch, number of touch contacts, and so forth. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determ ine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

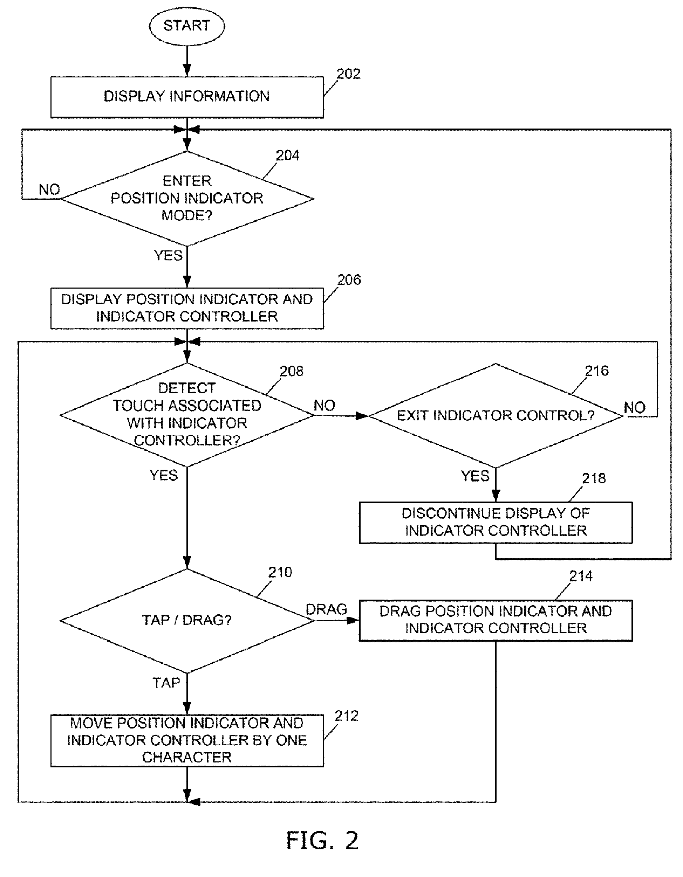

A flowchart illustrating an example of a method of controlling a position indicator on the touch-sensitive display 118 of the portable electronic device 100, is shown in FIG. 2. The method may be carried out by software executed, for example, processor 102. Coding of software for carrying out such a method is within the scope of a person of ordinary skill in the art given the present description. The method may contain additional or fewer processes than shown and/or described, and may be performed in a different order. Computer-readable code executable by at least one controller or processor of the portable electronic device to perform the method may be stored in a computer-readable storage medium, such as a non-transitory com puter-readable medium.

Information is displayed on the touch-sensitive display 118 at 202. The information includes characters, for example, alphabetical, numerical symbolic, or any other characters. The information may be displayed in any suitable application. For example, the information may be displayed in a message composition interface of a messaging application. The information may be displayed in a data entry field in a Web browser application. The information may be displayed for entry of information in other applications, such as a calendar application, a contacts or address book application, a word processing application, or any other suitable application. A keyboard may also be displayed on the touch-sensitive display 118. The keyboard may be any suitable keyboard such as a QWERTY keyboard, QWERTZ keyboard, AZERTY keyboard, and so forth. The keyboard includes a plurality of keys that are associated with characters that may be entered utilizing the keyboard.

When the portable electronic device 100 enters an indicator control mode at 204, the method continues at 206. The portable electronic device enters an indicator control mode when an indicator control mode input is received. The indicator control mode input may be, for example, a touch detected at a location on the touch-sensitive display 118 that is associated with the information. Thus, for example, the portable electronic device 100 enters an indicator control mode 204 when a touch is detected at a location associated with the displayed characters. Alternatively, the indicator control mode input may be receipt of a selection of an indicator control mode option in a menu or submenu, for example.

In response to detecting the indicator control mode input, a position indicator is displayed in the information. The position indicator may be displayed at a location in the characters, and thus at or between characters, that is associated with the location of the touch when the indicator control mode input is a touch on the touch-sensitive display 118. The position indicator may be a cursor, a caret, a pointer, a highlight block, an underscore, or any other moveable position indicator.

Along with the position indicator, an indicator controller is also displayed at 206. The indicator controller is associated with the position indicator and is utilized to control the location of the position indicator within the information. The indicator controller may be, for example, generally circular and may be displayed such that the indicator controller is generally centered on the position indicator. Characters that are displayed where the indicator controller is displayed, are visible when the indicator controller is displayed. Optionally, the characters displayed in the area at which the indicator controller is displayed, may be displayed at a larger size to appear magnified when the indicator controller is displayed. Thus, the indicator controller may appear to be a magnifying loupe disposed over the characters.

The indicator controller is divided into two or more areas that are associated with respective directions. For example the indicator controller may be divided into four areas, each associated with a respective one of a left direction, a right direction, an up direction, and a down direction relative to the orientation of the displayed information. The areas may be visibly divided such that each area is identified by displaying, for example, lines or other delimiters in the indicator controller. Alternatively, the areas may be associated with different directions but may not be identified on the display. The areas may be equal in size or may differ in size based on, for example, frequency of use.

When a touch is detected at 208, the method continues at 210.

When the touch is a tap at a location associated with one of the areas at 210, the position indicator is moved in the information by a single character at 212. A tap is a touch of short duration or duration less than a threshold value.

In the example of an indicator controller that includes the four areas referred to above, a tap in a first area associated with a left direction, moves the position indicator to the left by a single character. A tap in a second area associated with a right direction, moves the position indicator to the right by a single character. A tap in a third area associated with an up direction, moves the position indicator up by one line, or one character upwardly. A tap in a fourth area associated with a down direction, moves the position indicator down by one line, or one character downwardly.

The indicator controller may be moved along with the position indicator such that the indicator controller remains in the same location relative to the position indicator.

Thus, movement of the position indicator is controlled. To move the position indicator by two characters in one direction, two successive taps are applied in the area associated with the direction.

When the touch is a touch and drag at 210, the position indicator and the indicator controller are dragged 214 along with the touch. A touch and drag may be a touch that exceeds the threshold time for a tap. The position indicator and the indicator controller move along with movement of the touch. Thus, the position indicator and the indicator controller may be moved quickly to a different area of the touch-sensitive display 118.

When a touch associated with the indicator controller is not received at 208 and the electronic device 100 exits the indicator control mode at 216, display of the indicator controller may be discontinued at 218. The electronic device 100 may exit the indicator control mode, for example when a keyboard input is received, after a threshold period of time passes without input, when a selection is detected to exit cursor positioning, or at any other suitable time. Keyboard input, for example, when a character is entered utilizing the keyboard or when a delete function, backspace function, or return function is selected, may be utilized to exit cursor positioning. Thus, the electronic device 100 may exit the indicator control mode when a character is entered or when a function is selected utilizing the keyboard. Alternatively, the electronic device 100 may exit the indicator control mode after a threshold period of time elapses without detecting a touch input. In another alternative, an exit button may be provided and the electronic device 100 may exit the indicator control mode in response to detecting selection of the exit button. The exit button may be a virtual button or may be a physical or mechanical button.

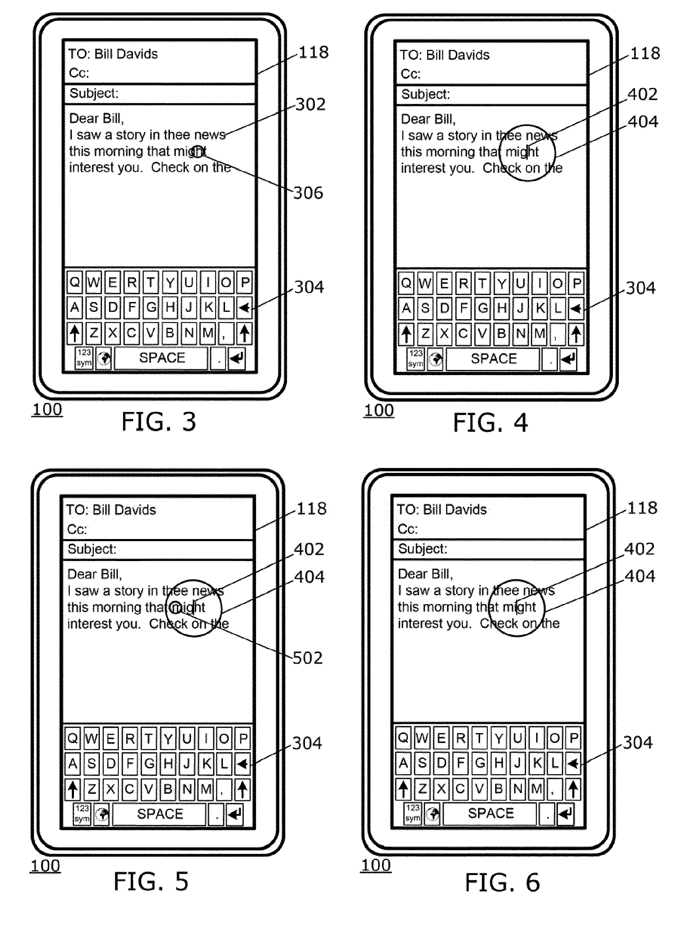

Although not shown in the flowchart of FIG. 3, text may be selected or handles or tags displayed for selection of text when the electronic device 100 exits the indicator controller mode. Optionally, handles or tags for selection of text may be displayed after a threshold period of time.

Examples of control of a position indicator are illustrated in FIG. 3 through FIG. 9 and described with continued reference to FIG. 2. The examples in FIG. 3 through FIG. 9 show a front view of one example of a portable electronic device 100. In the examples illustrated, a message composition interface of a messaging application is shown. The information displayed on the touch-sensitive display 118 includes a message 302 that includes a plurality of characters. A keyboard 304 is also displayed. In the example of FIG. 3, the portable electronic device 100 is not in an indicator control mode.

A touch, illustrated by the circle 306, is detected at a location associated with the characters and the portable electronic device 100 enters the indicator control mode at 204.

A position indicator 402, which in the present example is a caret or cursor, is displayed at a location associated with the touch and an indicator controller 404 is displayed at 206, as illustrated in FIG. 4. The indicator controller 404 in this example is a circle that is centered on the position indicator 402. Although the areas are not displayed on the indicator controller 404, the indicator controller 404 includes 4 areas, including a left area associated with a left direction, a right area associated with a right direction, an upper area associated with an upward direction, and a lower area associated with a downward direction. The terms left, right, up, upper, upward, down, downard, and lower are utilized herein with reference to the orientation of the displayed information on the portable electronic device 100.

A tap on the touch-sensitive display 118 at 210, at a location associated with the left area of the indicator controller 404, as illustrated by the circle 502 in FIG. 5, moves the position indicator 402 by one character to the left at 212, as illustrated in FIG. 6. The indicator controller 404 is also moved to remain centered on the position indicator 402.

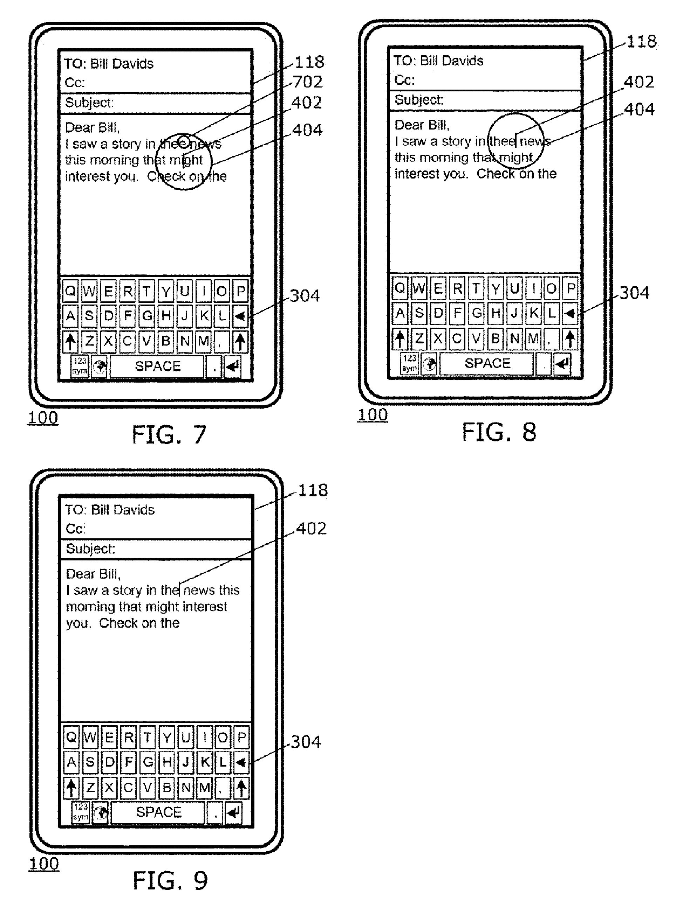

A tap on the touch-sensitive display 118 at 210, at a location associated with an upper area of the indicator controller 404, as illustrated by the circle 702 in FIG. 7, moves the position indicator 402 by one character upwardly, thus moving the position indicator up by one line at 212, as illustrated in FIG. 8. The indicator controller 404 is also moved to remain centered on the position indicator 402.

Referring to FIG. 9, a touch is detected on the keyboard 304, at a location associated with a delete key at 216, as illustrated by the circle 902. The portable electronic device 100 exits the indicator control mode and display of the indicator controller 404 is discontinued.

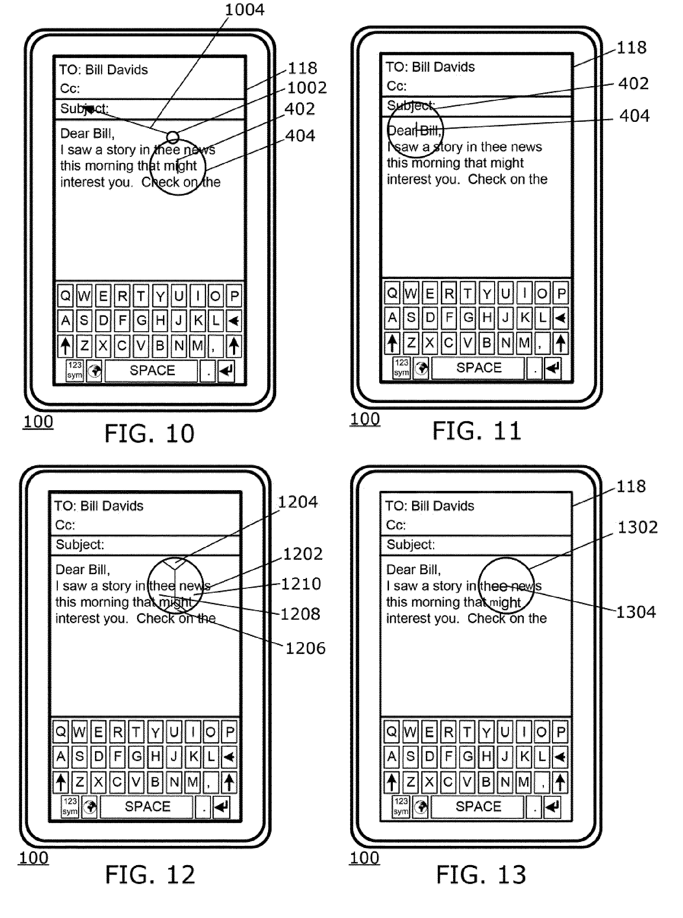

A touch on the touch-sensitive display 118 at 208, at a location associated with the indicator controller 404 is detected and identified as a touch and drag. The touch is illustrated by the circle 1002 and the drag distance and direction are illustrated by the arrow 1004 in FIG. 10. The touch and drag is identified at 210 and the position indicator and the indicator controller are dragged 214 along with the touch to a new location on the touch-sensitive display 118, as illustrated in FIG. 11.

In the example of FIG. 10, the area of contact of the touch 1002 overlaps at least partially with the indicator controller 404. An area around the displayed indicator controller 404 may be utilized to drag the indicator controller 404. Thus, a touch for which the contact area does not overlap with the indicator controller 404 may be utilized to drag the indicator controller 404 to a new position. In the example of the circular indicator controller, the area around the displayed indicator controller 404 may be an circular area that is concentric with and extends beyond the circular area of the indicator controller. A touch anywhere in this area may be utilized to move the indicator controller. Utilizing this area facilitates movement of the indicator controller and the indicator without obscuring or covering up the indicator controller, the indicator, or surrounding displayed information during movement.

FIG. 12 illustrates another example of an indicator controller 1202. The portable electronic device 100 is already in the indicator control mode and indicator controller 1202 is displayed. In this example, the indicator controller 1 002 includes lines to illustrate the areas associated with respective directions. The area 1204 is associated with the upward direction. The area 1206 is associated with the downward direction. The area 1208 is associated with the left direction. The area 1210 is associated with the right direction. The areas 1204, 1206 associated with the upward and downward directions are smaller than the areas 1208, 1210 associated with the left and right directions.

FIG. 11 illustrates yet another example of an indicator controller 1302. The portable electronic device 1 00 is already in the indicator control mode and indicator controller 1302 is displayed. In this example, the indicator controller 1302 appears to be a magnifying loupe such that the characters 1304 that appear to be displayed under the loupe, are displayed at a larger size than the characters that are not displayed under the loupe.

In the examples described above, the position indicator includes four areas, each associated with a respective direction. Alternatively, the position indicator may include, two areas, for example, associated with left and right directions. The method is not limited to the portable electronic device illustrated in the examples. The method may be applied utilizing other electronic devices. The method may also be utilized when the portable electronic device is in a landscape orientation rather than in the portrait orientation illustrated.

According to one aspect, a method is provided. The method includes displaying information including a plurality of characters on a touch-sensitive display of an electronic device, detecting an indicator control mode input, in response to detecting the indicator control mode input, displaying an indicator controller associated with a position indicator, the indicator controller having a first area associated with a first direction and a second area associated with a second direction, when a tap is detected at a location associated with the first area, moving the position indicator, by a single character of the plurality of characters, in the first direction, and when a tap is detected at a location associated with the second area, moving the position indicator, by a single character of the plurality of characters, in the second direction.

According to another aspect, an electronic device is provided. The electronic device includes a touch-sensitive display and at least one processor coupled to the touch-sensitive display and configured to display information including a plurality of characters on a touch-sensitive display of an electronic device, detect a indicator control mode input, in response to detecting the indicator control mode input, display an indicator controller associated with a position indicator, the indicator controller having a first area associated with a first direction and a second area associated with a second direction, when a tap is detected at a location associated with the first area, move the position indicator, by a single character within the plurality of characters, in the first direction, and when a tap is detected at a location associated with the second area, move the position indicator, by a single character within the plurality of characters, in the second direction.

Use of a finger, for example, to drag an indicator to a location may result in inaccurate location of the indicator. Repositioning the indicator by finger movement may again be innacurate and may result in moving the indicator too far, or not far enough. By associating areas of an indicator controller with respective directions, movement of the position indicator may be controlled and the position indicator may be accurately located, for example, for editing text or character strings. A touch or tap facilitates accurate movement and location of a position indicator, rather than sliding movement that is difficult to control to accurately locate the indicator controller. Further, magnifying the characters that appear to be displayed through the indicator controller, increases visibility, further facilitating location of the indicator controller.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying information including a plurality of characters on a touch-sensitive display of an electronic device;
detecting an indicator control mode input;
in response to detecting the indicator control mode input, displaying an indicator controller associated with a position indicator, the indicator controller having a first area associated with a first direction and a second area associated with a second direction;
when a tap is detected at a location associated with the first area, moving the position indicator, by a single character of the plurality of characters, in the first direction; and
when a tap is detected at a location associated with the second area, moving the position indicator, by a single character of the plurality of characters, in the second direction.

2. The method according to claim 1, wherein the indicator control mode input comprises a touch at a touch location associated with the information and wherein the position indicator is displayed at a character associated with the touch location.

3. The method according to claim 1, wherein the first direction and the second direction comprise left and right directions relative to the orientation of the displayed information.

4. The method according to claim 1, wherein the indicator controller has a third area associated with a third direction.

5. The method according to claim 4, wherein when a tap is detected at a location associated with the third area, moving the position indicator by a single line in the third direction.

6. The method according to claim 4, wherein the indicator controller has a fourth area associated with a fourth direction.

7. The method according to claim 6, wherein the first area, the second area, the third area, and the fourth area comprise left, right, up and down relative to the orientation of the displayed information.

8. The method according to claim 6, wherein when a tap is detected at a location associated with the third area, moving the position indicator by a single line in the third direction and when a tap is detected at a location associated with the fourth area, moving the position indicator by a single line in the fourth direction.

9. The method according to any preceding claim, wherein displaying the indicator controller comprises displaying such that the indicator controller is centered on the position indicator.

10. The method according to any preceding claim, wherein:
characters displayed where the indicator controller is displayed, are visible when the indicator controller is displayed, or
the characters displayed in an indicator controller area, are displayed at a larger size to appear magnified when the indicator controller is displayed.

11. The method according to any preceding claim, wherein the indicator controller is moved along with the position indicator.

12. The method according to any preceding claim, comprising at least one of:
discontinuing displaying the indicator controller when a new character is entered in the information or when a character is deleted from the information;
displaying a keyboard during displaying the indicator controller.

13. The method according to claim 1, wherein detecting an indicator control mode input comprises one of:
detecting a touch associated with the plurality of characters displayed on the touch-sensitive display;
receiving a selection of an option to enter the indicator control mode.

14. A computer-readable storage medium having computer-readable code executable by at least one processor of a portable electronic device to perform the method according to any preceding claim.

15. An electronic device comprising:
a touch-sensitive display; and
at least one processor coupled to the touch-sensitive display and configured to carry out the method steps of any one of claims 1 to 13.

## Amended claims

### Amended claims in accordance with Rule 137(2) EPC.

**1.** A method comprising:
displaying information including a plurality of characters on a touch-sensitive display (118) of an electronic device (100);
detecting an indicator control mode input;
in response to detecting the indicator control mode input, displaying an indicator controller (404) associated with a position indicator (402) such that the indicator controller (404) is centered on the position indicator (402), the indicator controller (404) having a first area associated with a first direction and a second area associated with a second direction;
when a tap is detected at a location associated with the first area, moving the position indicator, by a single character of the plurality of characters, in the first direction;
when a tap is detected at a location associated with the second area, moving the position indicator, by a single character of the plurality of characters, in the second direction; and
when the position indicator (402) is moved, the indicator controller (404) is moved along with the position indicator (402).

**2.** The method according to claim 1, wherein the indicator control mode input comprises a touch input at a touch location associated with the information and wherein the position indicator (402) is displayed at a character associated with the touch location.

**3.** The method according to claim 1, wherein the first direction and the second direction comprise left and right directions relative to the orientation of the displayed information.

**4.** The method according to claim 1, wherein the indicator controller (404) has a third area associated with a third direction.

**5.** The method according to claim 4, wherein when a tap is detected at a location associated with the third area, moving the position indicator (402) by a single line in the third direction.

**6.** The method according to claim 4, wherein the indicator controller (404) has a fourth area associated with a fourth direction.

**7.** The method according to claim 6, wherein the first area, the second area, the third area, and the fourth area comprise left, right, up and down relative to the orientation of the displayed information.

**8.** The method according to claim 6, wherein when a tap is detected at a location associated with the third area, moving the position indicator (402) by a single line in the third direction and when a tap is detected at a location associated with the fourth area, moving the position indicator (402) by a single line in the fourth direction.

**9.** The method according to any preceding claim, wherein:
characters displayed where the indicator controller (404) is displayed, are visible when the indicator controller (404) is displayed, or
the characters displayed in an indicator controller (404) area, are displayed at a larger size to appear magnified when the indicator controller (404) is displayed.

**10.** The method according to any preceding claim, comprising at least one of:
discontinuing displaying the indicator controller (404) when a new character is entered in the information or when a character is deleted from the information;
displaying a keyboard (304) during displaying the indicator controller (404).

**11.** The method according to claim 1, wherein detecting an indicator control mode input comprises one of:
detecting a touch associated with the plurality of characters displayed on the touch-sensitive display (118);
receiving a selection of an option to enter the indicator control mode.

**12.** A computer-readable storage medium having computer-readable code executable by at least one processor (102) of a portable electronic device (100) to perform the method according to any preceding claim.

**13.** An electronic device (100) comprising:
a touch-sensitive display (118); and
at least one processor (102) coupled to the touch-sensitive display (118) and configured to carry out the method steps of any one of claims 1 to 11.
